# EUROPÄISCHE PATENTANMELDUNG

(11) **EP 1 916 504 A2**
(43) Veröffentlichungstag der Anmeldung: **30.04.2008**
(21) Anmeldenummer: 07115775.4
(22) Anmeldetag: 06.09.2007
(51) Int. Cl.: G01C 22/00

(54) **Verfahren und Vorrichtung zur Messung des zurückgelegten Weges**

(30) Priorität: 27.10.2006 DE 102006050850
(71) Anmelder: Locanis Technologies AG, 85774 Unterföhring (DE)
(72) Erfinder: Irmer, Jochen, 82335 Berg (DE)
(74) Vertreter: Barth, Stephan Manuel

(57) **Zusammenfassung**

Es wird ein Verfahren zur Messung des Weges, den ein Fahrzeug (1) relativ zu einer zumindest abschnittsweise ebenen Referenzfläche (B) zurücklegt, vorgeschlagen, wobei der vom Fahrzeug (1) zurückgelegte Weg durch Vektoraddition von inkrementellen Streckenvektoren bestimmt wird. Das Verfahren umfasst die folgenden Schritte:
(a) Erfassen von digitalen Bilddaten der Referenzfläche (B) in einer Mehrzahl von aufeinander folgenden diskreten Frames mit einer Bildaufnahmeeinheit (20),
(b) Unterteilen eines ersten von zwei aufeinander folgenden Frames in mehrere Makroblöcke (Mij),
(c) Ermitteln von Makroblöcken (180) im zweiten der aufeinander folgenden Frames, welche jeweils den Makroblöcken (Mij) im ersten Frame entsprechen,
(d) Ermitteln von Verschiebungsvektoren (130, 170) von den Positionen der Makroblöcke (Mij) im ersten Frame zu den Positionen der jeweils entsprechenden Makroblöcke (180) im zweiten Frame, und
(e) Bestimmen eines inkrementellen Streckenvektors basierend auf den Verschiebungsvektoren (130, 170). Eine entsprechende Wegmessungsvorrichtung wird ebenfalls bereitgestellt.

## Beschreibung

Die vorliegende Erfindung betrifft ein Verfahren und eine Vorrichtung zur Messung des Weges, den ein Fahrzeug relativ zu einer zumindest abschnittsweise ebenen Referenzfläche zurücklegt, wobei der vom Fahrzeug zurückgelegte Weg durch vektoraddition von inkrementellen Streckenvektoren bestimmt wird.

Die Erfassung der aktuellen Position eines Fahrzeugs in Bezug auf eine Referenzposition ist in der Lagerverwaltung, beispielsweise für die Chargenverfolgung, von großer Bedeutung. Typischerweise wird in solchen Lagerverwaltungssystemen die Position des Fahrzeugs (bei dem es sich beispielsweise um einen Stapler handeln kann) an vorbestimmten Referenzpunkten erfasst, und danach die aktuelle Position des Fahrzeugs mit Hilfe eines Koppelnavigationssystems bestimmt.

Die WO01/13192 offenbart beispielsweise ein Verfahren zum Erfassen der Position eines Fahrzeugs mit Hilfe von in der Decke vorgesehenen reflektierenden Markierungen, welche vom Fahrzeug aus abgetastet werden, so dass beim Unterfahren einer Markierung die Position zu diesem Zeitpunkt als Referenzposition erfasst und gespeichert werden kann. Wenn sich das Fahrzeug von dieser Referenzposition wegbewegt, wird die aktuelle Position des Fahrzeugs mit einer Koppelnavigation berechnet. Dazu wird mittels eines Rad-Encoders in bestimmten zeitlichen Abständen die vom Fahrzeug zurückgelegte Strecke erfasst und mittels eines Gyroskops oder dergleichen ein Drehwinkel des Fahrzeuges erfasst. Die jeweils zurückgelegte Strecke ergibt in Verbindung mit dem Drehwinkel einen inkrementellen Streckenvektor. Die aktuelle Position des Fahrzeugs lässt sich dann durch Vektoraddition der inkrementellen Streckenvektoren bestimmen.

Ein Nachteil bei diesem Verfahren ist es, dass die vom Rad-Encoder ermittelte Wegstrecke aufgrund von Schlupf fehlerbehaftet ist. Ferner ist die vom Rad-Encoder ermittelte Wegstrecke vom Raddurchmesser abhängig, der im Falle von pneumatischen Reifen vom Reifendruck abhängt und im Falle von insbesondere bei Staplern häufig verwendeten Vollgummireifen aufgrund von Abrieb mit der Zeit abnimmt. Daher ist bei der Verwendung von Rad-Encodern zur Koppelnavigation eine regelmäßige Neukalibrierung notwendig.

Aus der EP1074960 ist eine Navigationsvorrichtung bekannt, welche mit einer CCD-Kamera so genannte Frames aufnimmt und aus zwei aufeinander folgenden Frames einen Bewegungsvektor erfasst.

Eine Aufgabe der Erfindung ist es, ein verbessertes Verfahren und eine Vorrichtung zur Messung des von einem Fahrzeug zurückgelegten Weges bereitzustellen, welche unbehaftet von Schlupffehlern sind.

### VORTEILE DER ERFINDUNG

Demgemäß vorgesehen ist ein Verfahren zur Messung des Weges, den ein Fahrzeug relativ zu einer zumindest abschnittsweise ebenen Referenzfläche zurücklegt, wobei der vom Fahrzeug zurückgelegte Weg durch Vektoraddition von inkrementellen Streckenvektoren bestimmt wird, mit ein- oder mehrmaliger Durchführung der folgenden Schritte:
(a) Erfassen von digitalen Bilddaten der Referenzfläche in einer Mehrzahl von aufeinander folgenden diskreten Frames mit einer Bildaufnahmeeinheit,
(b) Unterteilen eines ersten von zwei aufeinander folgenden Frames in mehrere Makroblöcke,
(c) Ermitteln von Makroblöcken im zweiten der aufeinander folgenden Frames, welche jeweils den Makroblöcken im ersten Frame entsprechen,
(d) Ermitteln von Verschiebungsvektoren von den Positionen der Makroblöcke im ersten Frame zu den Positionen der jeweils entsprechenden Makroblöcke im zweiten Frame, und
(e) Bestimmen eines inkrementellen Streckenvektors basierend auf den Verschiebungsvektoren.

Eine erfindungsgemäße Vorrichtung zur Messung des Weges, den ein Fahrzeug relativ zu einer zumindest abschnittsweise ebenen Referenzfläche zurücklegt, wobei die Vorrichtung den vom Fahrzeug zurückgelegten Weg durch Vektoraddition von inkrementellen Streckenvektoren bestimmt, umfasst:
eine Bildaufnahmeeinheit zum Erfassen von digitalen Bilddaten der Referenzfläche in einer Mehrzahl von aufeinander folgenden diskreten Frames,
einen Speicher zum Speichern von mindestens zwei aufeinander folgenden Frames, und
eine Auswerteeinheit, die einen ersten der zwei aufeinander folgenden Frames in mehrere Makroblöcke unterteilt, die Makroblöcken im zweiten Frame ermittelt, welche jeweils den Makroblöcken im ersten Frame entsprechen, die Verschiebungsvektoren von den Positionen der Makroblöcke im ersten Frame zu den Positionen der jeweils entsprechenden Makroblöcke im zweiten Frame ermittelt, und die einen inkrementellen Streckenvektor basierend auf den Verschiebungsvektoren bestimmt.

Es sollte beachtet werden dass mit "aufeinander folgenden Frames" Frames gemeint sind, die zeitlich hintereinander liegen, jedoch nicht unmittelbar aufeinander folgen müssen. Beispielsweise ist es auch möglich, lediglich jeden zweiten oder dritten einer Folge von Frames zur erfindungsgemäßen Wegmessung heranzuziehen.

Die der vorliegenden Erfindung zugrunde liegende Idee ist es, einen ersten Frame einer Referenzfläche (z.B. dem Boden) in Makroblöcke zu unterteilen und die Makroblöcke in einem darauf folgenden zweiten Frame zu suchen. Aus den Verschiebungen der einzelnen Makroblöcke im zweiten Frame wird eine Vektorschar ermittelt, anhand welcher der inkrementelle Bewegungsvektor bestimmt wird.

Dabei ist es vorteilhaft, wenn das Verfahren folgenden weiteren Schritt aufweist:
(f) Auswählen von bestimmten Verschiebungsvektoren aus den ermittelten Verschiebungsvektoren nach einem bestimmten Kriterium, wobei der inkrementelle Streckenvektor durch Bilden eines gemittelten Vektors aus den ausgewählten Verschiebungsvektoren ermittelt wird. Dies hat den Vorteil, dass nicht alle Verschiebungsvektoren zur Mittelung herangezogen werden und vor der Mittelung Ausreißer aus den Verschiebungsvektoren ausgefiltert werden. Somit wird verhindert, dass Ausreißer das Messergebnis verfälschen. Bei geeignetem Auswahlkriterium ist es somit möglich, ein akkurates Messergebnis zu erzielen, selbst wenn bis zu einem Drittel der Verschiebungsvektoren durch sich relativ zum Boden bewegende Störobjekte verfälscht sind.

Dabei ist es vorteilhaft, wenn als Kriterium zum Auswählen von bestimmten Verschiebungsvektoren das Chauvenetsche Kriterium auf mindestens eine skalare Eigenschaft der ermittelten Verschiebungsvektoren angewendet wird. Somit wird eine statistische Analyse der ermittelten Verschiebungsvektoren durchgeführt und Verschiebungsvektoren, die sich signifikant vom Mittel der Verschiebungsvektoren unterscheiden werden herausgefiltert und zur Mittelung nicht herangezogen.

Als skalare Eigenschaft eignen sich beispielsweise eine Vektorlänge des Verschiebungsvektors, eine Vektorlänge des Verschiebungsvektors projiziert in ein kartesisches Koordinatensystem und/oder ein Winkel zwischen dem Verschiebungsvektor und einem vorbestimmten Bezugsvektor.

Ferner ist es vorteilhaft, wenn zum Ermitteln des inkrementellen Streckenvektors der gemittelte Verschiebungsvektor mit einem Skalierungsfaktor multipliziert wird. Somit ist es möglich, den anhand der Bilddaten ermittelten gemittelten Verschiebungsvektor (dessen Länge in Pixeln angegeben ist) in einen Streckenvektor (dessen Länge in cm oder mm angegeben ist) umzurechnen.

Dabei ist es vorteilhaft, wenn das Verfahren die folgenden weiteren Schritte umfasst:
(g) Ermitteln des Abstands der Bildaufnahmeeinheit zur Referenzfläche, und
(h) Festlegen des Skalierungsfaktors unter Berücksichtigung des ermittelten Abstands. Auf diese Weise kann der Skalierungsfaktor automatisch festgelegt werden. Somit wird eine präzise Wegmessung gewährleistet, ohne dass eine ständige Neukalibrierung nötig ist, um einer geänderten Höhe vom Boden Rechnung zu tragen.

In einer vorteilhaften Ausgestaltung umfasst der Schritt (d) des Ermittelns von Makroblöcken im zweiten Frame die folgende Schritte:
(i) Erzeugen von charakteristischen Daten der unterteilten Makroblöcke im ersten Frame,
(j) Erzeugen der charakteristischen Daten von Makroblöcken (180) im zweiten Frame,
(k) Ermitteln von den Makroblöcken im ersten Frame entsprechenden Makroblöcken im zweiten Frame durch Vergleich der jeweiligen charakteristischen Daten und Bestimmen des Makroblocks im zweiten Frame, dessen charakteristischen Daten den charakteristischen Daten des Makroblocks im ersten Frame am ähnlichsten sind. Anstatt die Bilddaten Pixel für Pixel zu vergleichen werden hier charakteristische Daten jedes Makroblocks bestimmt, welche dann verglichen werden. Dabei ist es vorteilhaft, zum Vergleich der jeweiligen charakteristischen Daten lediglich eine vorbestimmte Teilmenge der charakteristischen Daten heranzuziehen. Dies hat den Vorteil, dass der Vergleich wesentlich schneller durchgeführt werden kann.

In einer vorteilhaften Ausgestaltung wird die vorbestimmte Teilmenge der charakteristischen Daten in Abhängigkeit von der Oberflächenstruktur der Referenzfläche festgelegt. Dabei kann die Oberflächenstruktur der Referenzfläche durch Referenzierung von Daten ermittelt wird, welche die Oberflächenstruktur der Referenzfläche am momentanen Ort des Fahrzeugs repräsentieren. Dies ermöglicht eine dynamische Festlegung der evaluierten charakteristischen Daten. Wenn sich also das Fahrzeug zwischen Böden (Referenzflächen) unterschiedlicher Oberflächenbeschaffenheit bewegt, dann kann die Auswahl der evaluierten charakteristischen Daten dynamisch optimiert und somit die zur Suche der Makroblocks im zweiten Frame benötigte Zeit verringert werden.

Die charakteristischen Daten können beispielsweise durch Anwendung einer zwei-dimensionalen linearen Transformation, insbesondere einer diskreten Kosinustransformation (DCT), auf den jeweiligen Makroblock und/oder durch Umwandlung der Bilddaten des jeweiligen Makroblocks in Baseline-JPEG-Daten erzeugt werden.

In einer weiteren vorteilhaften Ausgestaltung der Erfindung werden zum Ermitteln von den Makroblöcken im ersten Frame entsprechenden Makroblöcken im zweiten Frame lediglich Makroblöcke im zweiten Frame herangezogen, welche sich in einer bestimmten Umgebung von dem Makroblock im zweiten Frame befinden, welcher sich aus einer Verschiebung des Makroblocks im ersten Frame um einen Prädiktionsvektor ergibt. Durch eine solche Prädiktion wird der Bereich, der nach dem entsprechenden Makroblock im zweiten Frame durchsucht wird, erheblich eingeschränkt, so dass der Suchalgorithmus drastisch verkürzt wird.

Dabei kann der Prädiktionsvektor beispielsweise durch Kalmanfilterung einer Serie von zuvor ermittelten inkrementellen Streckenvektoren ermittelt werden.

In der erfindungsgemäßen Vorrichtung ist es vorteilhaft, dass die Auswerteeinheit bestimmte Verschiebungsvektoren aus den ermittelten Verschiebungsvektoren nach einem bestimmten Kriterium auswählt und den inkrementellen Streckenvektor durch Bilden des eines gemittelten Vektors aus den ausgewählten Verschiebungsvektoren ermittelt.

Aus den bereits oben genannten Gründen ist es vorteilhaft, wenn die Auswerteeinheit als Kriterium zum Auswählen von bestimmten Verschiebungsvektoren das Chauvenetsche Kriterium auf mindestens eine skalare Eigenschaft der ermittelten Verschiebungsvektoren anwendet.

Dabei kann die skalare Eigenschaft beispielsweise eine Vektorlänge des Verschiebungsvektors, eine Vektorlänge des Verschiebungsvektors projiziert in ein kartesisches Koordinatensystem und/oder ein Winkel zwischen dem Verschiebungsvektor und einem vorbestimmten Bezugsvektor sein.

In einer vorteilhaften Weiterbildung weist die Vorrichtung einen Abstandsmesser auf, welcher den Abstand der Bildaufnahmeeinheit zur Referenzfläche ermittelt, wobei die Auswerteeinheit auf Basis des ermittelten Abstands einen Skalierungsfaktor berechnet, und die Auswerteeinheit zum Ermitteln des inkrementellen Streckenvektors den gemittelten Verschiebungsvektor mit dem berechneten Skalierungsfaktor multipliziert.

In einer vorteilhaften Ausgestaltung ist die Bildaufnahmeeinheit als Infrarotkamera ausgebildet. Somit ist die Messung robust gegen wechselnde Lichtverhältnisse.

In einer vorteilhaften Weiterbildung ist dabei eine Infrarotleuchte vorgesehen ist, welche einen von der Infrarotkamera erfassten Bereich der Referenzfläche mit Infrarotlicht ausleuchtet. Somit wird eine konstante Ausleuchtung des von der Infrarotkamera erfassten Bereichs erreicht.

Es ist vorteilhaft, wenn die Auswerteeinheit zum Ermitteln von Makroblöcken im zweiten Frame charakteristische Daten der unterteilten Makroblöcke im ersten Frame erzeugt, die charakteristischen Daten von Makroblöcken im zweiten Frame erzeugt, und den Makroblöcken im ersten Frame entsprechende Makroblöcke im zweiten Frame ermittelt durch Vergleich der jeweiligen charakteristischen Daten und Bestimmen des Makroblocks im zweiten Frame, dessen charakteristischen Daten den charakteristischen Daten des Makroblocks im ersten Frame am ähnlichsten sind.

Dabei ist es aus den oben genannten Gründen vorteilhaft, wenn die Auswerteeinheit zum Vergleich der jeweiligen charakteristischen Daten lediglich eine vorbestimmte Teilmenge der charakteristischen Daten heranzieht.

In einer vorteilhaften Ausgestaltung ist ein weiterer Speicher vorgesehen ist, in welchem Daten gespeichert sind, welche die Oberflächenstruktur der Referenzfläche in der Umgebung des Fahrzeugs repräsentieren, wobei die Auswerteeinheit die Oberflächenstruktur der Referenzfläche am momentanen Ort des Fahrzeugs durch Referenzierung des weiteren Speichers ermittelt, und die vorbestimmte Teilmenge der charakteristischen Daten in Abhängigkeit von der ermittelten Oberflächenstruktur der Referenzfläche am momentanen Ort des Fahrzeugs festlegt.

Die oben beschriebene Vorrichtung kann vorteilhaft in einem Navigationssystem eines Fahrzeugs, insbesondere eines Staplers, verwendet werden.

### ZEICHNUNGEN

Die Erfindung wird nachfolgend anhand der in den schematischen Figuren der Zeichnungen angegebenen Ausführungsbeispiele näher erläutert. Es zeigt dabei:
- Fig. 1: eine schematische Darstellung eines Fahrzeugs mit einer Wegmessungsvorrichtung nach einer erfindungsgemäßen Ausführungsform;
- Fig. 2: eine schematische Darstellung der Wegmessungsvorrichtung in Fig. 1;
- Fig. 3: ein Flussdiagram eines erfindungsgemäßes Wegmessungsverfahren zur Ermittlung eines inkrementellen Streckenvektors;
- Fig. 4: eine schematische Darstellung eines in Makroblöcke Mij unterteilten ersten Frames;
- Fig. 5: eine schematische Darstellung eines in Makroblöcke Mij unterteilten ersten Frames sowie korrespondierende Makroblöcke eines zweiten Frames;
- Fig. 6: ein Flussdiagram der in Schritt S80 in Fig. 3 durchgeführten Prozedur; und
- Fig. 7: eine schematische Darstellung eines durch DCT erhaltenen Datenblocks.

### BESCHREIBUNG DER AUSFÜHRUNGSBEISPIELE

In allen Figuren der Zeichnungen sind gleiche bzw. funktionsgleiche Elemente - sofern nichts Anderes angegeben ist - mit gleichen Bezugszeichen versehen worden.

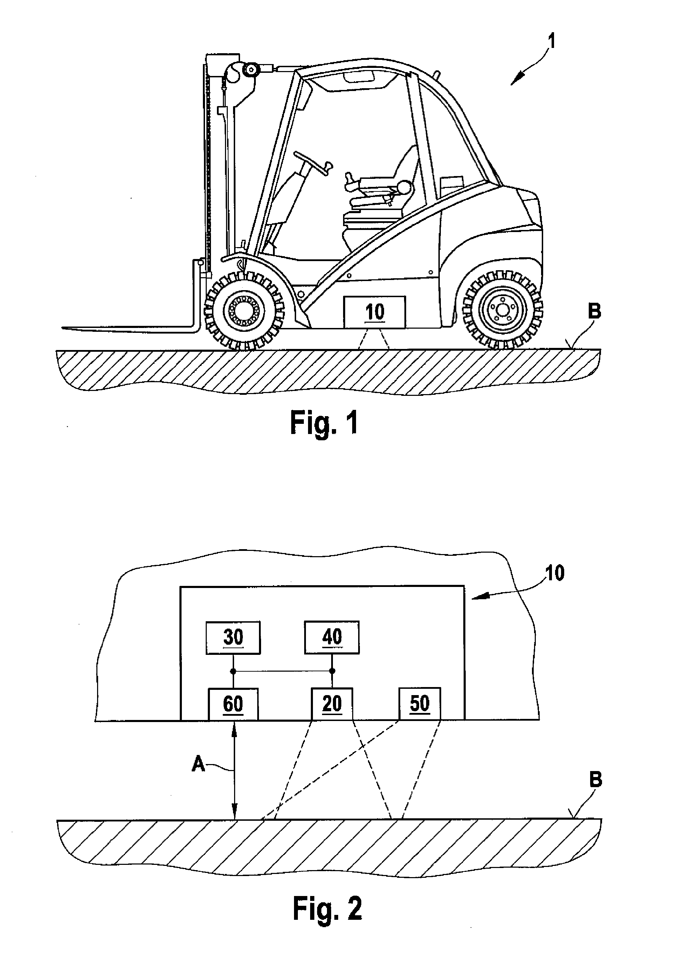

Fig. 1 zeigt eine schematische Darstellung eines Fahrzeugs 1 mit einer Wegmessungsvorrichtung 10 nach einer erfindungsgemäßen Ausführungsform. Das Fahrzeug 1 ist in diesem Beispiel als Stapler bzw. Gabelstapler ausgebildet, wie er insbesondere in einer Lagereinrichtung oder dergl. verwendet wird. Fig. 2 ist eine schematische Darstellung der Wegmessungsvorrichtung 10 in Fig. 1.

Die Wegmessungsvorrichtung 10 umfasst im dargestellten Beispiel eine Bildaufnahmeeinheit 20, einen Speicher 30, eine Auswerteeinheit 40, eine Infrarotleuchte 50 und ein Abstandsmesseinheit 60 auf. Wie in Fig. 2 dargestellt, können die Bildaufnahmeeinheit 20, der Speicher 30, die Auswerteeinheit 40, und die Abstandsmesseinheit 60 über einen Datenbus miteinander verbunden sein. Die Auswerteeinheit 40 kann insbesondere als programmgesteuerte Steuer- und Auswerteeinheit ausgebildet sein, die die einzelnen Komponenten der Wegmessungsvorrichtung 10 gemäß einem in einem Festspeicher abgespeicherten Programm steuert. Die Auswerteeinheit 40 kann beispielsweise als FPGA oder dergleichen ausgebildet sein.

Während sich das Fahrzeug 1 über den Boden bzw. die Referenzfläche B bewegt, nimmt die Bildaufnahmeeinheit 20 periodisch Bilder des Bodens B auf, welche im Speicher 30 abgespeichert werden, der beispielsweise als Arbeitsspeicher ausgebildet sein kann. Aus den abgespeicherten Bildern ermittelt die Auswerteeinheit 40 einen inkrementellen Bewegungsvektor, welcher eine Strecke und eine Richtung anzeigt, in welcher sich das Fahrzeug in der Zeit zwischen der Erfassung von zwei aufeinander folgenden Bildern bewegt hat. Die Ermittlung dieses inkrementellen Bewegungsvektors wird im Folgenden detailliert beschrieben. Aus den nacheinander ermittelten inkrementellen Bewegungsvektoren kann somit die Position des Fahrzeugs verfolgt werden.

Die Bildaufnahmeeinheit 20 ist im vorliegenden Beispiel als Infrarotkamera ausgebildet. Dies hat den Vorteil, dass der Einfluss der Lichtbedingungen der Umgebung auf die Auswertung verringert wird, die Ermittlung der inkrementellen Bewegungsvektoren also robuster gegenüber Veränderungen der Lichtbedingungen wird. Zum Gewährleisten von konstanten Lichtbedingungen leuchtet die Infrarotleuchte 50 zumindest den von der Bildaufnahmeeinheit 20 erfassten Bereich des Bodens B aus. Die Bildaufnahmeeinheit 20 ist ferner mit einem nicht näher dargestellten Tageslichtfilter versehen, welcher bestimmte spektrale Lichtanteile aus dem in die Bildaufnahmeeinheit 20 eintretenden Licht herausfiltert, wodurch die aufgenommenen Bilder für die anschließende Verarbeitung optimiert werden. Die Bildaufnahmeeinheit 20 weist ferner einen Hochgeschwindigkeitsshutter für Belichtungszeiten von beispielsweise 300 µs bis 1 ms auf. Solche kurzen Belichtungszeiten haben den Vorteil, dass die aufgenommenen Bilder durch die Bewegung des Fahrzeugs nicht oder nur vernachlässigbar wenig verschmiert werden. Die Bildaufnahmeeinheit 20 nimmt beispielsweise 25 oder 50 Bilder pro Sekunde auf. Die Bildaufnahmeeinheit 20 ist vorteilhafterweise derart am Fahrzeug 1 angebracht, dass die optische Achse des Objektivs der Bildaufnahmeeinheit 20 orthogonal zur Bezugsfläche B angeordnet ist. Dies stellt sicher, dass die Verzerrungen in den aufgenommenen Bildern so gering wie möglich sind.

Die Bildaufnahmeeinheit 20 umfasst einen Analog-DigitalWandler, der die aufgenommenen Bilder in digitale Daten eines geeigneten Formats umwandelt. Ein solches in digitale Daten umgewandeltes Bild wird im Folgenden auch als "Frame" bezeichnet. Von der Bildaufnahmeeinheit 20 aufgenommene Frames werden im Speicher 30 abgespeichert oder zwischengespeichert. Im vorliegenden Beispiel besteht ein Frame aus einer Array-Anordnung von Pixeln, wobei jedem Pixel ein Grauwert zwischen 0 und 255 zugewiesen wird.

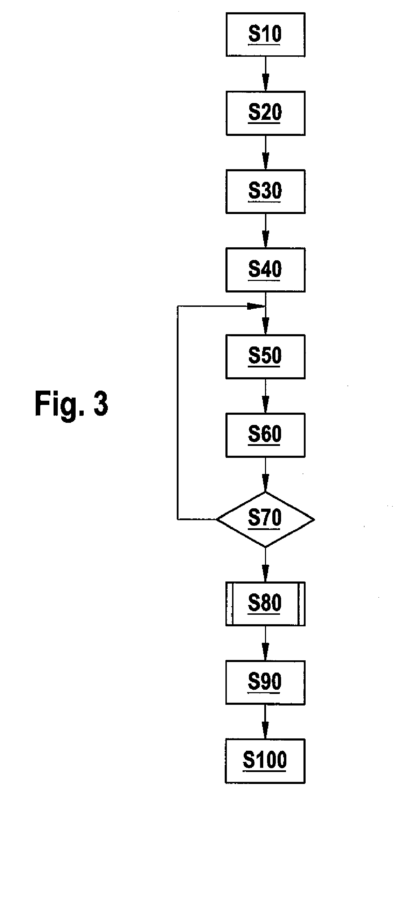

Fig. 3 illustriert ein Wegmessungsverfahren zur Ermittlung eines inkrementellen Streckenvektors, welcher dem Weg entspricht, den das Fahrzeug zwischen dem Erfassen von zwei aufeinander folgenden Frames zurückgelegt hat.

In Schritt S10 werden zunächst zwei aufeinander folgende Frames Fn-1 und Fn im Speicher 30 abgespeichert.

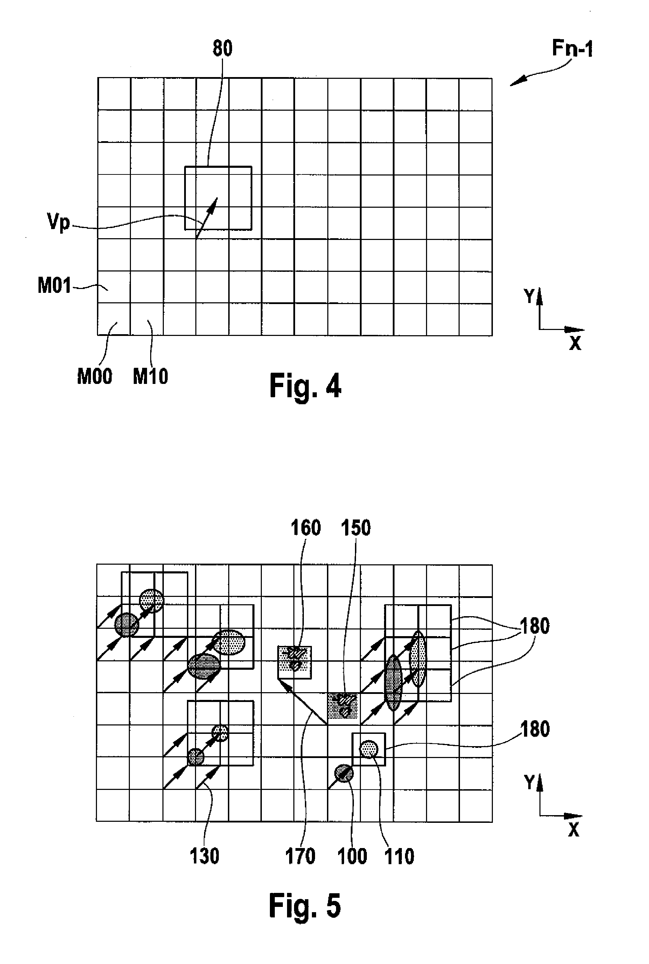

In Schritt S20 wird der erste Frame Fn-1 in Makroblöcke bzw. Bildkacheln unterteilt. Als "Makroblock" wird hierbei eine Anordnung von mxm Pixeln verstanden, wobei m typischerweise 8, 16, oder 32 beträgt. Fig. 4 zeigt einen in Makroblöcke Mij unterteilten Frame. Aus Gründen der Übersichtlichkeit ist hier ein Frame aus 8 × 12 Makroblöcken dargestellt. Die Größe der Frames ist jedoch nicht darauf beschränkt und die Frames sind in der Praxis typischerweise größer.

In Schritt S30 werden die Bilddaten des ersten Frames Fn-1 aufbereitet. Dazu wird jeder einzelne Makroblock im Frame Fn-1 einer diskreten Kosinus-Transformation (DCT) unterworfen. Mittels einer DCT werden die Bilddaten aus dem Orts- in den Frequenzbereich transformiert. Das Ergebnis der Anwendung der DCT auf einen Makroblock ist ein Datenblock derselben Größe mxm bestehend aus für den Makroblock charakteristischen Daten.

Dieser Datenblock einer zweidimensionalen diskreten Kosinus-Transformation stellt gewissermaßen einen für den Makroblock charakteristischen und eindeutigen Fingerabdruck dar. Der Vorteil dieser Aufbereitung der Bilddaten besteht darin, dass sie den Vergleich der Bilddaten des ersten Frames Fn-1 mit denen des zweiten Frames Fn erleichtert, wie im folgenden noch näher erläutert wird. Das Ergebnis der DCT der einzelnen Makroblöcke wird im Speicher 30 abgespeichert.

In Schritt S40 werden Makroblöcke des zweiten Frame Fn einer DCT unterworfen. Im Unterschied zu Schritt S30 wird hierbei jedoch nicht nur die DCT von Seite an Seite nebeneinander angeordneten Markoblöcken ermittelt, sondern die DCT für jeden möglichen Makroblock im zweiten Frame ermittelt. Beispielsweise wird zunächst die DCT des links unten angeordneten Makroblocks M00 ermittelt, danach die DCT des um einen Pixel nach rechts verschobenen Makroblocks und somit nach und nach jeder mögliche Makroblock im zweiten Frame aufbereitet. Das Ergebnis der DCT der einzelnen Makroblöcke im zweiten Frame Fn wird wiederum im Speicher 30 abgespeichert.

In den Schritten S50 und S60 erfolgt der Vergleich der einzelnen Makroblöcke im ersten Frame Fn-1 mit den Makroblöcken im zweiten Frame, beginnend mit Makroblock M00.

Dazu wird in Schritt S50 zunächst ein bestimmter Prädiktionsbereich 80 im zweiten Frame Fn festgelegt, wobei lediglich die Makroblöcke in diesem Bereich zum Vergleich herangezogen werden. Dieser Prädiktionsbereich wird anhand eines Prädiktionsvektors Vp ermittelt, welcher den Streckenvektor darstellt, der von der Anordnung als nächster inkrementeller Streckenvektor vermutet wird. Im einfachsten Fall kann der zuletzt ermittelte inkrementelle Streckenvektor als Prädiktionsvektors Vp ermittelt werden. Es ist aber auch möglich, den Prädiktionsvektor Vp durch Kalmanfilterung der zuvor ermittelten inkrementellen Streckenvektoren zu ermitteln. Der Prädiktionsbereich 80 ist ein Bereich im zweiten Frame Fn, der einer Gesamtheit von Makroblöcken entspricht, die um denjenigen Makroblock angeordnet ist, der einer Verschiebung des momentan betrachteten Makroblocks im ersten Frame Fn-1 um den Prädiktionsvektor Vp entspricht. Dies ist in Fig. 4 für den Makroblock M44 dargestellt.

In Schritt S60 erfolgt dann der Vergleich des momentan betrachteten Makroblocks im ersten Frame Fn-1 mit den Makroblöcken im Prädiktionsbereich 80. Die durch die DCT erhaltenen Datenblöcken enthalten mxm Koeffizienten (0,0) bis (m,m), in denen der niedrigste Koeffizient (0,0) dem Grauwert des dazugehörigen Makroblocks entspricht. Höherwertige Koeffizienten entsprechen Mustern, die mit einer bestimmten Frequenz im Makroblock auftreten. Zunächst wird in S60 der niedrigste Koeffizient (0,0) des momentan betrachteten Makroblocks des ersten Frames Fn-1 mit den jeweiligen niedrigsten Koeffizienten (0,0) der einzelnen Makroblöcke in dem Prädiktionsbereich 80 im zweiten Frame Fn verglichen. Dabei werden alle Makroblocks im Prädiktionsbereich 80 identifiziert, bei denen sich der Koeffizient (0,0) um nicht mehr als einen bestimmten Wert (z.B. 5 Graustufen) von dem Koeffizienten (0,0) des Makroblocks im ersten Frame Fn-1 unterscheidet. Danach werden aus diesen identifizierten Makroblocks dann diejenigen ausgewählt, bei denen sich der nächste Koeffizient (0,1) oder (1,0) um nicht mehr als einen bestimmten Wert von dem entsprechenden Koeffizienten (0,0) im ersten Frame unterscheidet. Somit wird die Menge der möglichen Makroblöcke im Prädiktionsbereich sukzessive eingeengt, bis derjenige Makroblock im Prädiktionsbereich identifiziert wird, dessen charakteristische Daten (bzw. DCT-"Fingerabdruck") den charakteristischen Daten des momentan betrachteten Makroblocks im ersten Frame am ähnlichsten ist. Der Verschiebungsvektor, welcher der Verschiebung des momentan betrachteten Makroblocks im ersten Frame zum identifizierten Makroblock im zweiten Frame entspricht, lässt sich durch eine X-Verschiebung bzw. X-Komponente dX in x-Richtung und eine Y-Verschiebung bzw. Y-Komponente dY in Y-Richtung darstellen und wird im Speicher 30 abgespeichert. Die X-Verschiebung und die Y-Verschiebung sind jeweils Integerwerte in Pixeln, z.B. (x, y) = (5 Pixel, 7 Pixel) oder dergl.

Der Vorteil der sich hierbei durch die Aufbereitung der Bilddaten durch DCT ergibt ist der, dass nicht sämtliche Pixel verglichen werden müssen, sondern ein Vergleich von wenigen Zahlenwerten ausreichend ist.

In Schritt S70 prüft das Verfahren, ob für sämtliche Makroblöcke ein Verschiebungsvektor ermittelt wurde. Falls das nicht der Fall ist, springt das Verfahren zurück zu Schritt S50, woraufhin dann die Schritte S50 und S60 für den nächsten Makroblock durchgeführt werden. Andernfalls springt das Verfahren zu Schritt S80.

Das Ergebnis des Verfahrens bis zu Schritt S70 ist eine Vektorschar, in der jedem Makroblock des ersten Frames Fn-1 ein Verschiebungsvektor zugeordnet ist. Dies ist schematisch in Fig. 5 veranschaulicht. Fig. 5 stellt einige markante Objekte 100 im ersten Frame sowie die dazugehörigen Objekte 110 im zweiten Frame dar. Aus Gründen der Übersichtlichkeit sind die Objekte 100 dunkel schattiert und die Objekte 110 hell schattiert dargestellt. Beispiele für solche markanten Objekte sind Steine oder dergleichen oder auch Veränderungen in der Bodenbeschaffenheit, die in den Frames als Grauwertveränderungen erkennbar sind. Das erfindungsgemäße Verfahren erkennt somit die Position der Objekte 110 im zweiten Frame die zu den Objekten im ersten Frame gehören. Aus der Verschiebung der Makroblöcke 180 im zweiten Frame werden dann die Verschiebungsvektoren 130 ermittelt, was in Fig. 5 nur für einige Makroblöcke repräsentativ dargestellt ist. Durch Mittelung der Verschiebungsvektoren 130 lässt sich somit der inkrementelle Bewegungsvektor errechnen.

Dabei stellt sich jedoch das folgende in Fig. 5 dargestellte Problem: Falls ein von der Bildaufnahmeeinheit 20 erfasstes Störobjekt 150 sich relativ zur Bodenfläche B bewegt, dann kann es auch im zweiten Frame als Störobjekt 160 identifiziert werden, wobei der dazugehörige Verschiebungsvektor 170 sich drastisch von den übrigen Verschiebungsvektoren 130 der Hauptbewegungsrichtung unterscheidet. Ein Beispiel für ein solches Störobjekt 150, 160 ist ein trockenes Blatt oder ein Papierschnitzel oder dergleichen, der z.B. durch den Wind unter das Fahrzeug geweht wird, oder ein Insekt, welches sich relativ zur Bodenfläche B bewegt. Würde nun der Bewegungsvektor durch Mittelung aller Verschiebungsvektoren ermittelt, dann würden die in Fig. 5 als Ausreißer 170 dargestellten Vektoren das Ergebnis verfälschen.

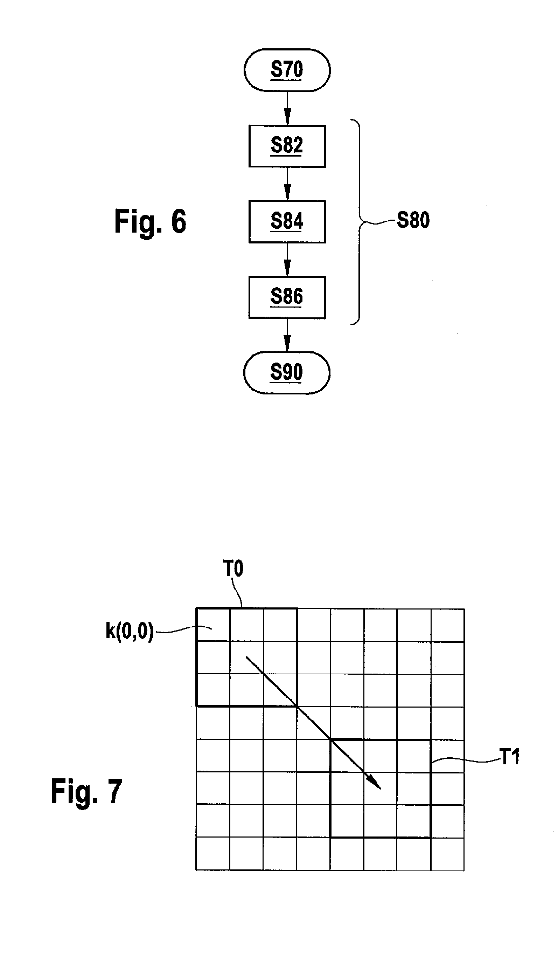

In Schritt S80 erfolgt daher zunächst eine Filterung der Verschiebungsvektoren 130, 170 dieser Vektorschar. Die in Schritt S80 durchgeführte Prozedur ist in Fig. 6 näher dargestellt.

Zunächst wird in Schritt S82 das arithmetische Mittel von mindestens einer skalaren Eigenschaft der ermittelten Verschiebungsvektoren 130, 170 gebildet. Beispiele für geeignete skalare Eigenschaften sind die Vektorlänge der jeweiligen Verschiebungsvektoren, die Länge der Verschiebungsvektoren in x-Richtung und/oder in y-Richtung (also x- und/oder y-Komponente, bzw. die Vektorlänge des Verschiebungsvektors projiziert in ein kartesisches Koordinatensystem), und ein Winkel zwischen den Verschiebungsvektoren und einem vorbestimmten Bezugsvektor (bzw. der γ-Richtung oder der x-Richtung) ist. Im vorliegenden Beispiel wird das arithmetische Mittel der X-Verschiebungen und der Y-Verschiebungen der Verschiebungsvektoren gebildet und im Speicher 30 abgespeichert.

Im folgenden Schritt S84 wird die Standardabweichung dieser skalaren Eigenschaften ermittelt, also hier die Standardabweichungen der X-Verschiebungen und der Y-Verschiebungen (X-Komponente und Y-Komponente) aller Verschiebungsvektoren, und im Speicher 30 abgespeichert. Eine große Standardabweichung deutet hierbei auf eine große zahl von Ausreißern hin.

Im nächsten Schritt S86 werden diejenigen Verschiebungsvektoren identifiziert, bei denen sich jede der genannten skalaren Eigenschaften (X-Verschiebung und Y-Verschiebung) um nicht mehr als eine Standardabweichung vom arithmetischen Mittelwert der Eigenschaft unterscheidet. Auf diese Weise werden Verschiebungsvektoren ausgeschlossen, die wie der Verschiebungsvektor 170 in Fig. 5 Ausreißer darstellen und somit das Gesamtergebnis verfälschen.

In einer bevorzugten Abwandlung dieses Verfahrens wird in Schritt S86 das Chauvenetsche Kriterium auf die skalaren Eigenschaften der ermittelten Verschiebungsvektoren angewendet. Dazu wird unter Verwendung einer Normalverteilung zu jedem Datenwert die Wahrscheinlichkeit ermittelt, dass ein Datenwert dieser Größe vorliegt. Die ermittelte Wahrscheinlichkeit wird mit der Anzahl der vorliegenden Datenwerte (also der Anzahl der Makroblöcke, für die ein Verschiebungsvektor ermittelt wurde) multipliziert. Falls das Ergebnis dieser Multiplikation kleiner als 0,5 ist, dann handelt es sich bei diesem Datenwert um einen Ausreißer, der im Folgenden nicht weiter in Betracht gezogen wird.

Eine solche Vorfilterung mittels des Chauvenetschen Kriteriums kann auf jede skalare Eigenschaft eines Vektors aus der ermittelten Schar der Verschiebungsvektoren angewandt werden. Als skalare Eigenschaften eignen sich die Vektorlängen der Verschiebungsvektoren, die Winkel der Verschiebungsvektoren bezüglich eines Bezugsvektors, sowie der Projektionen der Verschiebungsvektoren in ein kartesisches Koordinatensystem. Eine rekursive Anwendung des Chauvenetsche Kriteriums ist ebenfalls möglich.

Im darauf folgenden Schritt S90 wird ein inkrementeller Streckenvektor durch Bilden eines gemittelten Vektors aus den in Schritt S86 identifizierten Verschiebungsvektoren 130 (also den Verschiebungsvektoren, die nicht als Ausreißer ausgeschlossen wurden) ermittelt. Dazu wird der Mittelwert der X-Verschiebungen und der Y-Verschiebungen der identifizierten Verschiebungsvektoren 130 gebildet, wobei die mittlere X-Verschiebung und die Y-Verschiebung den gemittelten inkrementellen Streckenvektor darstellen. Das Ergebnis ist somit ein inkrementeller Streckenvektor, deren Länge (bzw. x-Verschiebung und Y-Verschiebung) in Pixeln dargestellt wird, wobei aufgrund der Mittelung die Werte der X-Verschiebung und Y-Verschiebung nicht nur ganzzahlige Werte sondern auch Dezimalbrüche sein können.

Aufgrund der statistischen Filterung der Verschiebungsvektoren 130, 170 in Schritt S80 wird eine fehlertolerante Auswertung der Verschiebungsvektoren ermöglicht, die insbesondere robust gegenüber sich relativ zur Referenzfläche B bewegenden Störobjekten ist.

Im folgenden Schritt S100 wird der in Pixeln dargestellte inkrementelle Verschiebungsvektor in einen in Zentimetern angegebenen Streckenvektor umgerechnet. Zu diesem Zwecke wird der Verschiebungsvektor mit einem Skalierungsfaktor multipliziert.

Da bei gegebener Brennweite die Breite und Höhe (in cm) des Ausschnitts der Referenzfläche B, der in einem Frame erfasst wird, lediglich vom Abstand der Linse der Bildaufnahmeeinheit 20 von der Referenzfläche B abhängt, wird der Skalierungsfaktor unter Berücksichtigung des Abstands der Linse der Bildaufnahmeeinheit 20 von der Referenzfläche B festgelegt. Zu diesem Zwecke ist die Abstandsmesseinheit 60 vorgesehen, welche den Abstand A zur Referenzfläche B misst. Vorteilhafterweise ist die Abstandsmesseinheit 60 in der Nähe der Bildaufnahmeeinheit 20 vorgesehen, und zwar derart, dass ihr Abstand A zum Boden identisch mit dem Abstand der Linse der Bildaufnahmeeinheit 20 zum Boden ist.

Anhand dieses Abstands A wird dann der Skalierungsfaktor berechnet, mit welchem der inkrementelle Bewegungsvektor (in Pixeln) in einen inkrementellen Streckenvektor (in Zentimetern) umgerechnet wird.

Da der Abstand A während der Fahrt im wesentlichen konstant ist und sich nur über längere Perioden (beispielsweise durch Abrieb der Räder oder Druckverlust in den Reifen) ändert, muss er nicht ständig gemessen werden, sondern es genügt, den Abstand A bei Fahrtantritt und eventuell in längeren periodischen Abständen zu messen.

Ein Navigationsverfahren bzw. Verfahren zur Bestimmung der aktuellen Position eines Fahrzeuges 1 gemäß einer Ausführungsform, welches mit der Wegmessungsvorrichtung 10 versehen ist kann wie folgt implementiert werden. Zunächst wird die tatsächliche Position und Orientierung des Fahrzeugs 1 in einem Bezugskoordinatensystem bestimmt und im Speicher 30 abgespeichert. Dies kann beispielsweise mit dem eingangs genannten in der WO01/13192 offenbarten Verfahren geschehen. Alternativ dazu ist auch eine manuelle Eingabe der Koordinaten im Bezugskoordinatensystem oder das genaue Positionieren des Fahrzeugs 1 an einer vorbestimmten Position möglich.

Wenn sich nun das Fahrzeug 1 in Bewegung setzt, werden durch wiederholte Durchführung des oben beschriebenen Verfahrens inkrementelle Bewegungsvektoren ermittelt. Durch Vektoraddition der inkrementellen Bewegungsvektoren wird dann die aktuelle Position des Fahrzeugs 1 im Bezugskoordinatensystem bestimmt. Gegebenenfalls ist dabei eine Transformation der inkrementellen Bewegungsvektoren in das Bezugskoordinatensystem notwendig, um Drehungen des Fahrzeugs 1 Rechnung zu tragen.

Bei Verwendung des oben beschriebenen Verfahrens in einem Lagersystem oder dergleichen kann die aktuelle Position des Fahrzeugs 1 periodisch und/oder zu bestimmten Zeitpunkten (z.B. beim Beladen oder Entladen) über einen nicht näher dargestellte Kommunikationseinrichtung drahtlos an eine zentrale Rechenvorrichtung übermittelt werden. Diese speichert dann beispielsweise die Lagerkoordinaten der entladenen Ware.

Da der zeitliche Abstand zwischen den einzelnen Frames bekannt ist, ist es weiterhin möglich, aus den ermittelten Bewegungsvektoren die momentane Fahrzeuggeschwindigkeit zu ermitteln. Dazu wird lediglich der Betrag der Bewegungsvektoren mit einem konstanten Faktor multipliziert.

Obwohl die obige Ausführungsform vorstehend anhand von bevorzugten Ausführungsbeispielen beschrieben wurde, ist sie darauf nicht beschränkt, sondern auf vielfältige Art und Weise modifizierbar.

So wurde bereits in der Erläuterung angedeutet, dass es möglich ist, den Vergleich der Koeffizienten (charakteristischen Daten) auf eine Teilmenge der für jeden Makroblock vorliegenden Koeffizienten zu beschränken. So ist es beispielsweise möglich, für den Vergleich der Koeffizienten lediglich eine Teilmenge von 3×3 oder 4×4 der vorliegenden 8×8 Koeffizienten der heranzuziehen. In einer vorteilhaften modifizierten Ausführungsform wird dabei die zum Vergleich herangezogene Teilmenge in Abhängigkeit von der Bodenbeschaffenheit festgelegt. Dies wird im Folgenden unter Bezugnahme auf Fig. 7 erläutert.

Fig. 7 ist eine schematische Darstellung eines durch die DCT erhaltenen Datenblocks. Wie bereits oben erwähnt entspricht der links oben angeordnete Koeffizient k(0,0) dem Grauwert des dazugehörigen Makroblocks und je weiter rechts bzw. unten die Koeffizienten angeordnet sind, desto größer ist die räumliche Frequenz im entsprechenden Makroblock, der sie zugeordnet sind. Bei wenig oder gar nicht strukturierten Flächen, wie zum Beispiel Betonböden oder dergleichen, ist daher der Koeffizient mit dem Maximalwert der links oben angeordnete Koeffizient k(0,0), wohingegen ein solcher Boden kaum höherfrequente Anteile aufweist, so dass die weiter rechts unten angeordneten Koeffizienten in der Regel im Wesentlichen Null betragen. Bei strukturierten Böden, wie zum Beispiel Asphaltböden oder Teppichböden, sind dagegen höherfrequente Anteile vorhanden, so dass auch die für solche Böden charakteristischen Werte der DCT den höherfrequenten Koeffizienten entsprechen.

Es ist daher vorteilhaft, bei der Festlegung der zum Vergleich herangezogenen Teilmenge, die Bodenbeschaffenheit zu berücksichtigen. So kann bei einem wenig oder gar nicht strukturierten Untergrund, wie z.B. Betonboden, die links oben im Datenblock angeordnete Teilmenge T0 von 3x3 Werten herangezogen werden, welche niederfrequente Werte repräsentiert, und bei einem strukturierten Boden, wie z.B. einem Asphalt- oder Teppichboden, eine weiter rechts unten angeordnete Teilmenge T1 herangezogen werden welche höherfrequente Werte repräsentiert. Somit wird der für den Suchalgorithmus erforderliche Rechenaufwand reduziert und gleichzeitig sichergestellt, dass die relevantesten Daten zum Vergleich der Makroblöcke verwendet werden.

Zur Ermittlung der Bodenbeschaffenheit kann ein digitales Kartensystem herangezogen werden. Dabei kann das Fahrzeug 1 mit einem Speicher ausgerüstet sein, in welchem Daten (Karteninformationen) gespeichert sind, welche die Umgebung des Fahrzeugs (also beispielsweise die Lagereinrichtung, in der das Fahrzeug eingesetzt wird) repräsentieren. Hierbei ist jedem Ort der Umgebung eine bestimmte Bodenbeschaffenheit zugeordnet. Somit kann beispielsweise zum Ausdruck gebracht werden, dass innerhalb einer Lagerhalle Betonboden vorliegt, wohingegen außerhalb der Lagerhalle Asphaltboden vorliegt.

Der momentane Ort des Fahrzeugs ist, wie oben beschrieben, im Betrieb zu jeder Zeit bekannt. Durch Referenzierung der Karteninformationen ist es also jederzeit möglich, die Bodenbeschaffenheit am Ort des Fahrzeugs 1 festzustellen. Die ermittelte Bodenbeschaffenheit kann dann zur Auswahl einer geeigneten Teilmenge der ermittelten DCT-Koeffizienten herangezogen werden. Die nicht in der Teilmenge enthaltenen DCT-Koeffizienten können dann zum Vergleich erst gar nicht herangezogen werden oder auch alle auf Null gesetzt werden. Mit der oben beschriebenen Verfahren ist eine dynamische Anpassung an die Bodenbeschaffenheit am Ort des Fahrzeugs 1 möglich. Ferner wurde im obigen Ausführungsbeispiel die statistische Filterung der Verschiebungsvektoren durch Anwendung des Chauvenetschen Kriteriums sowie durch Bestimmen von Mittelwerten und Auswählen derjenigen Vektoren, die (bzw. deren X- und Y-Verschiebungen) innerhalb einer Standardabweichung von diesem Mittelwert liegen. Die Erfindung ist jedoch nicht auf dieses Ausführungsbeispiel beschränkt, und es ist möglich, eine beliebige statistische Filterung zu verwenden, mit der Ausreißer unter den Verschiebungsvektoren aussortiert werden können.

Ferner wurde im oben erläuterten Ausführungsbeispiel in Schritt S30 und S40 eine Aufbereitung der Bilddaten durch DCT vorgenommen. Stattdessen ist es aber auch möglich eine Fourier-Transformation (z.B. DFT), eine Transformation in Baseline-JPEG oder auch jede andere Transformation vorzunehmen, die es ermöglicht, den anschließenden Such- bzw. Vergleichsvorgang in Schritt S60 abzukürzen.

Ferner ist der für Schritt S60 beschriebene Such- und Vergleichsvorgang nicht auf den oben beschriebenen beschränkt und es ist auch möglich andere Suchstrategien einzusetzen. Beispielsweise ist es möglich, zunächst ein Raster von Makroblöcken im Abstand von jeweils 3 Pixeln oder dergleichen abzusuchen.

Ferner wurde im oben beschriebenen Beispiel der Skalierungsfaktor bei geändertem Abstand A der Bildaufnahmeeinheit 20 zum Boden B geändert. Selbstverständlich ist es aber ebenso möglich, einen konstanten Skalierungsfaktor zu verwenden und die Brennweite bzw. den Zoomfaktor der Bildaufnahmeeinheit 20 zu verändern, falls eine Änderung des Abstands A festgestellt wird.

### BEZUGSZEICHENLISTE

- 1: Fahrzeug
- 10: Wegmessungsvorrichtung
- 20: Bildaufnahmeeinheit
- 30: Speicher
- 40: Auswerteeinheit
- 50: Infrarotleuchte
- 60: Abstandsmesseinheit
- 80: Prädiktionsbereich
- 100: Objekt im ersten Frame
- 110: Objekt im zweiten Frame
- 130: Verschiebungsvektor
- 150: Störobjekt im ersten Frame
- 160: Störobjekt im zweiten Frame
- 170: Verschiebungsvektor
- 180: Makroblöcke
- B: Referenzfläche bzw. Boden
- Vp: Prädiktionsvektor
- M00,: M01, M10 Makroblöcke

## Patentansprüche

1. Verfahren zur Messung des Weges, den ein Fahrzeug (1) relativ zu einer zumindest abschnittsweise ebenen Referenzfläche (B) zurücklegt, wobei der vom Fahrzeug (1) zurückgelegte Weg durch Vektoraddition von inkrementellen Streckenvektoren bestimmt wird, mit ein- oder mehrmaliger Durchführung der folgenden Schritte:
(a) Erfassen von digitalen Bilddaten der Referenzfläche (B) in einer Mehrzahl von aufeinander folgenden diskreten Frames mit einer Bildaufnahmeeinheit (20),
(b) Unterteilen eines ersten von zwei aufeinander folgenden Frames in mehrere Makroblöcke (Mij),
(c) Ermitteln von Makroblöcken (180) im zweiten der aufeinander folgenden Frames, welche jeweils den Makroblöcken (Mij) im ersten Frame entsprechen,
(d) Ermitteln von Verschiebungsvektoren (130, 170) von den Positionen der Makroblöcke (Mij) im ersten Frame zu den Positionen der jeweils entsprechenden Makroblöcke (180) im zweiten Frame, und
(e) Bestimmen eines inkrementellen Streckenvektors basierend auf den Verschiebungsvektoren (130, 170).

2. Verfahren nach Anspruch 1, **gekennzeichnet durch** den folgenden weiteren Schritt:
(f) Auswählen von bestimmten Verschiebungsvektoren (130) aus den ermittelten Verschiebungsvektoren (130, 170) nach einem bestimmten Kriterium,
wobei der inkrementellen Streckenvektor **durch** Bilden eines gemittelten Vektors aus den ausgewählten Verschiebungsvektoren (130) ermittelt wird.

3. Verfahren nach Anspruch 2, **dadurch gekennzeichnet, dass** als Kriterium zum Auswählen von bestimmten Verschiebungsvektoren (130) das Chauvenetsche Kriterium auf mindestens eine skalare Eigenschaft der ermittelten Verschiebungsvektoren (130, 170) angewendet wird.

4. Verfahren nach Anspruch 3, **dadurch gekennzeichnet, dass** die skalare Eigenschaft eine Vektorlänge des Verschiebungsvektors (130, 170), eine Vektorlänge des Verschiebungsvektors (130, 170) projiziert in ein kartesisches Koordinatensystem und/oder ein Winkel zwischen dem Verschiebungsvektor (130, 170) und einem vorbestimmten Bezugsvektor ist.

5. Verfahren nach einem der Ansprüche 2 bis 4, **dadurch gekennzeichnet, dass** zum Ermitteln des inkrementellen Streckenvektors der gemittelte Verschiebungsvektor mit einem Skalierungsfaktor multipliziert wird.

6. Verfahren nach Anspruch 5, **gekennzeichnet durch** die folgenden weiteren Schritte:
(g) Ermitteln des Abstands (A) der Bildaufnahmeeinheit (20) zur Referenzfläche (B), und
(h) Festlegen des Skalierungsfaktors unter Berücksichtigung des ermittelten Abstands (A).

7. Verfahren nach einem der vorhergehenden Ansprüche, **dadurch gekennzeichnet, dass** Schritt (d) des Ermittelns von Makroblöcken (180) im zweiten Frame folgende Schritte umfasst:
(i) Erzeugen von charakteristischen Daten der unterteilten Makroblöcke (Mij) im ersten Frame,
(j) Erzeugen der charakteristischen Daten von Makroblöcken (180) im zweiten Frame,
(k) Ermitteln von den Makroblöcken (Mij) im ersten Frame entsprechenden Makroblöcken (180) im zweiten Frame durch Vergleich der jeweiligen charakteristischen Daten und Bestimmen des Makroblocks (180) im zweiten Frame, dessen charakteristischen Daten den charakteristischen Daten des Makroblocks (Mij) im ersten Frame am ähnlichsten sind.

8. Verfahren nach Anspruch 7, **dadurch gekennzeichnet, dass** zum Vergleich der jeweiligen charakteristischen Daten lediglich eine vorbestimmte Teilmenge der charakteristischen Daten herangezogen wird.

9. Verfahren nach Anspruch 8, **dadurch gekennzeichnet, dass** die vorbestimmte Teilmenge der charakteristischen Daten in Abhängigkeit von der Oberflächenstruktur der Referenzfläche festgelegt wird.

10. Verfahren nach Anspruch 9, **dadurch gekennzeichnet, dass** die Oberflächenstruktur der Referenzfläche durch Referenzierung von Daten ermittelt wird, welche die Oberflächenstruktur der Referenzfläche am momentanen Ort des Fahrzeugs (1) repräsentieren.

11. Verfahren nach einem der Ansprüche 7 bis 10, **dadurch gekennzeichnet, dass** die charakteristischen Daten durch Anwendung einer zwei-dimensionalen linearen Transformation, insbesondere einer diskreten Kosinustransformation (DCT), auf den jeweiligen Makroblock und/oder durch Umwandlung der Bilddaten des jeweiligen Makroblocks in Baseline-JPEG-Daten erzeugt werden.

12. Verfahren nach einem der Ansprüche 7 bis 11, **dadurch gekennzeichnet, dass** zum Ermitteln von den Makroblöcken (Mij) im ersten Frame entsprechenden Makroblöcken (180) im zweiten Frame lediglich Makroblöcke (180) im zweiten Frame herangezogen werden, welche sich in einer bestimmten Umgebung von dem Makroblock (180) im zweiten Frame befinden, welcher sich aus einer Verschiebung des Makroblocks (Mij) im ersten Frame um einen Prädiktionsvektor (Vp) ergibt.

13. Verfahren nach Anspruch 12, **dadurch gekennzeichnet, dass** der Prädiktionsvektor (Vp) durch Kalmanfilterung einer Serie von zuvor ermittelten inkrementellen Streckenvektoren ermittelt wird.

14. Vorrichtung zur Messung des Weges, den ein Fahrzeug (1) relativ zu einer zumindest abschnittsweise ebenen Referenzfläche (B) zurücklegt, wobei die Vorrichtung den vom Fahrzeug (1) zurückgelegten Weg durch Vektoraddition von inkrementellen Streckenvektoren bestimmt,
mit einer Bildaufnahmeeinheit (20) zum Erfassen von digitalen Bilddaten der Referenzfläche (B) in einer Mehrzahl von aufeinander folgenden diskreten Frames,
mit einem Speicher (30) zum Speichern von mindestens zwei aufeinander folgenden Frames, und
mit einer Auswerteeinheit (40), die einen ersten der zwei aufeinander folgenden Frames in mehrere Makroblöcke (Mij) unterteilt, die Makroblöcken (180) im zweiten Frame ermittelt, welche jeweils den Makroblöcken (Mij) im ersten Frame entsprechen, die Verschiebungsvektoren (130, 170) von den Positionen der Makroblöcke (Mij) im ersten Frame zu den Positionen der jeweils entsprechenden Makroblöcke (180) im zweiten Frame ermittelt, und die einen inkrementellen Streckenvektor basierend auf den Verschiebungsvektoren (130, 170) bestimmt.

15. Vorrichtung nach Anspruch 14, **dadurch gekennzeichnet, dass** die Auswerteeinheit bestimmte Verschiebungsvektoren (130) aus den ermittelten Verschiebungsvektoren (130, 170) nach einem bestimmten Kriterium auswählt und den inkrementellen Streckenvektor durch Bilden des eines gemittelten Vektors aus den ausgewählten Verschiebungsvektoren (130) ermittelt.

16. Vorrichtung nach Anspruch 15, **dadurch gekennzeichnet, dass** die Auswerteeinheit als Kriterium zum Auswählen von bestimmten Verschiebungsvektoren (130) das Chauvenetsche Kriterium auf mindestens eine skalare Eigenschaft der ermittelten Verschiebungsvektoren (130, 170) anwendet.

17. Vorrichtung nach Anspruch 16, **dadurch gekennzeichnet, dass** die skalare Eigenschaft eine Vektorlänge des Verschiebungsvektors (130, 170), eine Vektorlänge des Verschiebungsvektors (130, 170) projiziert in ein kartesisches Koordinatensystem und/oder ein Winkel zwischen dem Verschiebungsvektor (130, 170) und einem vorbestimmten Bezugsvektor ist.

18. Vorrichtung nach einem der Ansprüche 14 bis 17, **dadurch gekennzeichnet,**
**dass** die Vorrichtung einen Abstandsmesser (60) aufweist, welcher den Abstand (A) der Bildaufnahmeeinheit (20) zur Referenzfläche (B) ermittelt,
**dass** die Auswerteeinheit (40) auf Basis des ermittelten Abstands (A) einen Skalierungsfaktor berechnet, und
**dass** die Auswerteeinheit (40) zum Ermitteln des inkrementellen Streckenvektors den gemittelten Verschiebungsvektor mit dem berechneten Skalierungsfaktor multipliziert.

19. Vorrichtung nach einem der Ansprüche 14 bis 18, **dadurch gekennzeichnet, dass** die Bildaufnahmeeinheit (20) als Infrarotkamera ausgebildet ist.

20. Vorrichtung nach Anspruch 19, **dadurch gekennzeichnet, dass** eine Infrarotleuchte (50) vorgesehen ist, welche einen von der Infrarotkamera erfassten Bereich der Referenzfläche (B) mit Infrarotlicht ausleuchtet.

21. Vorrichtung nach einem der Ansprüche 14 bis 20, **dadurch gekennzeichnet, dass** die Auswerteeinheit (40) zum Ermitteln von Makroblöcken (180) im zweiten Frame charakteristische Daten der unterteilten Makroblöcke (Mij) im ersten Frame erzeugt, die charakteristischen Daten von Makroblöcken (180) im zweiten Frame erzeugt, und den Makroblöcken (Mij) im ersten Frame entsprechende Makroblöcke (180) im zweiten Frame ermittelt durch Vergleich der jeweiligen charakteristischen Daten und Bestimmen des Makroblocks (180) im zweiten Frame, dessen charakteristischen Daten den charakteristischen Daten des Makroblocks (Mij) im ersten Frame am ähnlichsten sind.

22. Vorrichtung nach Anspruch 21, **dadurch gekennzeichnet, dass** die Auswerteeinheit (40) zum Vergleich der jeweiligen charakteristischen Daten lediglich eine vorbestimmte Teilmenge der charakteristischen Daten heranzieht.

23. Vorrichtung nach Anspruch 22, **dadurch gekennzeichnet, dass** ein weiterer Speicher vorgesehen ist, in welchem Daten gespeichert sind, welche die Oberflächenstruktur der Referenzfläche in der Umgebung des Fahrzeugs repräsentieren, wobei die Auswerteeinheit (40) die Oberflächenstruktur der Referenzfläche am momentanen Ort des Fahrzeugs (1) durch Referenzierung des weiteren Speichers ermittelt, und die vorbestimmte Teilmenge der charakteristischen Daten in Abhängigkeit von der ermittelten Oberflächenstruktur der Referenzfläche am momentanen Ort des Fahrzeugs (1) festlegt.

24. Verwendung einer Vorrichtung nach einem der Ansprüche 14 bis 23 in einem Navigationssystem eines Fahrzeugs (1), insbesondere eines Staplers.
